## Europäisches Patentamt
## European Patent Office
## Office européen des brevets

(19)

(11) Veröffentlichungsnummer: **0 305 522**
**A1**

(12)

# EUROPÄISCHE PATENTANMELDUNG
Veröffentlicht nach Art. 158 Abs. 3 EPÜ

(21) Anmeldenummer: 87903477.5

(22) Anmeldetag: 19.03.87

Daten der zugrundeliegenden internationalen Anmeldung:

(86) Internationale Anmeldenummer:
PCT/SU87/00033

(87) Internationale Veröffentlichungsnummer:
WO88/07186 (22.09.88 88/21)

(51) Int. Cl.³: **G 01 M 1/22**

(43) Veröffentlichungstag der Anmeldung:
08.03.89 Patentblatt 89/10

(84) Benannte Vertragsstaaten:
AT DE FR IT

(71) Anmelder: LIPETSKY STANKOSTROITELNY ZAVOD
ul. Sovetskaya, 66
Lipetsk, 398001(SU)

(71) Anmelder: LENINGRADSKOE VYSSHEE INZHENERNOE
MORSKOE UCHILISCHE IMENI ADMIRALA
S.O.MAKAROVA
Kosaya linia, 15a
Leningrad, 199026(SU)

(72) Erfinder: MAKAROV, Oleg Alexandrovich
ul. Generala Khazova, 8-9 Leningradskaya obl.
Pushkin, 188620(SU)

(72) Erfinder: NISENMAN, Vladimir Isaevich
pr. Lenina, 29-66
Lipetsk, 398020(SU)

(72) Erfinder: PRYADILOV, Vadim Ivanovich
ul. Budapeshtskaya, 31-1-16
Leningrad, 192212(SU)

(72) Erfinder: TSIMANSKY, Juris Petrovich
ul. M.Kazakova, 10-1-534
Leningrad, 198302(SU)

(74) Vertreter: Patentanwälte Beetz sen. - Beetz jun. Timpe -
Siegfried - Schmitt-Fumian- Mayr
Steinsdorfstrasse 10
D-8000 München 22(DE)

(54) ANORDNUNG ZUM SELBSTTÄTIGEN AUSGLEICH VON ABRIEBPLATTEN.

(57) A device for automatic balancing of an abrasive disk (2) mounted on the spindle (3) of a machine tool comprises an imbalance correcting mechanism consisting of a casing (5) with cavities (71, 72, 73) connected to a liquid source (19) through a distributing unit (9) consisting of hydraulic valves (10) with electromagnetic drives (121, 122, 123). The device further comprises cavity position pick-ups (171, 172, 173) mounted on a casing (4) of the machine tool and an imbalance pick-up (1) connected to an amplifier-shaper (13). The output of the amplifier-shaper (13) is connected to a common input of a coincidence circuit, the other inputs of which and the output are connected respectively to the outputs of the cavity position pick-ups (171, 172, 173) and to the input of the distributing unit (9), whereas the imbalance correcting mechanism is provided with at least one mark (21).

EP 0 305 522 A1

./...

FIG. 1

# EINRICHTUNG ZUR AUTOMATISCHEN AUSWUCHTUNG EINER SCHLEIF-SCHEIBE

## Gebiet der Technik

Die Erfindung bezieht sich auf die Messtechnik und betrifft insbesondere Einrichtungen zur automatischen Auswuchtung einer an der Maschinenspindel angeordneten Schleifscheibe.

## Stand der Technik

Es ist eine Einrichtung zur automatischen Auswuchtung einer an der Maschinenspindel angeordneten Schleifscheibe (SU, A, 381941) bekannt, die einen Unwuchtgeber, eine Unwuchtausgleichsvorrichtung enthält, die durch den Geber gesteuert und mit vier am Umfang des Läufers gleichmässig angeordneten, mit einer Flüssigkeit z.T. gefüllten Hohlräumen versehen ist. Jedes Paar der diametral entgegengesetzt liegenden Hohlräume hat einen Verbindungskanal und ist über einen Verteiler mit einem Elektroantrieb und Durchgangsventilen an eine Druckluftquelle angeschlossen. Um die Unwucht einer Schleifscheibe auszugleichen, wird die Flüssigkeit unter der Wirkung der Druckluft aus einem Hohlraum in den anderen abgedrückt, bis der Elektroantrieb des Verteilers abgeschaltet ist.

Diese Einrichtung ist aber kompliziert in der Herstellung. Darüber hinaus weist sie keinen ausreichenden Automatisierungsgrad auf, was deren Betriebszuverlässigkeit herabsetzt.

Es ist enne Einrichtung zur automatischen Auswuchtung einer an der Maschinenspindel angeordneten Schleifscheibe (SU, A, 619814) bekannt, die eine Unwuchtausgleichsvorrichtung in Form eines an der Maschinenspindel angeordneten Zylinderkörpers mit an dessen Umfang gleichmässig angeordneten Hohlräumen und einen Verteiler enthält, der in Form von in der Unwuchtausgleichsvorrichtung gegenüber den Hohlräumen angeordneten Flüssigkeitsventilen mit Druckluftsteuerung ausgeführt ist. Der Verteiler ist über Kanäle mit einer Flüssigkeits- und einer Luftquelle über ein Koppelglied verbunden, das zur Kopplung von rotierenden Flüssigkeits- und Luftzuführkanälen mit der feststehenden Flüssigkeits- und Druckluftquelle vorgesehen ist.

Die Flüssigkeitsventile des Verteilers sind mit ihren Unwuchtgebern verbunden, die pneumatisch ausgeführt sind. Die Düsen der Geber sind im Körper der Ausgleichsvorrichtung und die sämtlichen Gebern gemeinsame, ringförmig ausgebildete Klappe am Maschinengestell angeordnet.

Infolge der Unausgeglichenheit der Schleifscheibe, d.h. der Unwucht, verschiebt sich die Spindelachse unter der Wirkung der Fliehkraft in Richtung der Unausgeglichenheit und ändert die Spaltweite zwischen der Aussenfläche der Klappe und den Düsen der Unwuchtgeber, was eine Drucksteigerung bzw. -minderung im Druckluftzufuhrkanal hervorruft, worauf der Druckluftantrieb eines jeweiligen Flüssigkeitsventils betätigt wird und das letztere entweder öffnet oder sperrt, wodurch die Flüssigkeitszuführung zu einem Hohlraum gesteuert wird.

Die konstruktive Ausführung der genannten Einrichtung erscheint aber als kompliziert, denn es gilt, eine Druckluftzufuhr zum rotierenden Körper zu sichern, um die Flüssigkeitsverteilung und -zuführung zu den Hohlräumen der Ausgleichsvorrichtung zu steuern. Dadurch wird die Zuverlässigkeit der Einrichtung beeinträchtigt.

Darüber hinaus wird das Vorhandensein einer zu beseitigenden Unwucht nach einer Abweichung der Drehachse der Spindel von deren geometrischer Achse bestimmt, die durch eine bei der Rotation von unausgeglichenen Teilen der Schleifscheibe entstehende Fliehkraft hervorgerufen wird. Diese Abweichung beträgt für moderne Werkzeugmaschinen meist einen Wert von ca. 0,02 m. Derartige Werte liegen unterhalb von Toleranzen für zu koppelnde Teile der Düsen und der Klappe des Unwuchtgebers, weshalb die Empfindlichkeit des Unwuchtgebers die Forderungen nicht erfüllt, die an die Messgenauigkeit für die Werte der Abweichung der geometrischen Achse der Spindel von deren Drehachse gestellt werden, was auch die Zuverlässigkeit der Auswuchtung herabmindert.

## Offenbarung der Erfindung

Der Erfindung liegt die Aufgabe zugrunde, eine Einrichtung zur automatischen Auswuchtung einer Schleifscheibe mit derartiger Konstruktion und Steuerschaltung für die Flüssigkeitsverteilung über die Hohlräume einer Ausgleichsvorrichtung zu schaffen, die die Anwendung eines Unwuchtgebers pneumatischen Typs sowie eine Druckluftzuführung zur Ausgleichsvorrichtung überflüssig machen, wodurch die Auswuchtgenauigkeit und die Zuverlässigkeit der Einrichtung unter Beibehaltung der Automatisierung des Auswuchtsvorganges erhöht werden.

Die gestellte Aufgabe wird dadurch gelöst, dass die Einrichtung zur automatischen Auswuchtung einer an der Maschinenspindel angeordneten Schleifscheibe, die einen Unwuchtgeber, eine Unwuchtausgleichsvorrichtung, die in Form eines an der Spindel angeordneten Zylinderkörpers mit N Hohlräumen (N $\geq$ 3) ausgeführt ist, die an dessen Umfang gleichmässig angeordnet sind, und einen mit diesen und mit einer Flüssigkeitsquelle verbundenen Verteiler enthält, gemäss der Erfindung mit einem Treiberverstärker, der an den Ausgang des Unwuchtgebers angeschlossen ist, der mechanische Schwingungen in ein elektrisches Signal zur Erzeugung eines Unwuchtsignals in Form eines periodischen Zweipegelsignals umwandelt, mit mindestens einer mit der Unwuchtausgleichsvorrichtung starr gekoppelten Markierung, mit mindestens zwei Hohlraum-Stellungsgebern, die am Maschinengestell angeordnet sind und Hohlraum-Stellungsimulse beim Vorbeigehen der Markierung an den Stellungsgebern erzeugen, und mit einer Koizidenzschaltung versehen ist, deren Ausgänge an die Eingänge des Verteilers, deren gemeinsamer Eingang an den Ausgang des Treiberverstärkers angeschlossen und deren andere Eingänge mit den Ausgängen der Stellungsgeber elektrisch gekoppelt sind und die zur Erzeugung eines Steuersignals für die Flüssigkeitszuführung zum jeweiligen Hohlraum bei einer zeitlichen Koinzidenz der Hohlraum-Stellungsimpulse mit dem Unwuchtsignal mit aktivem Pegel vorgesehen ist, wobei der Verteiler in Form von N Flüssigkeitsventilen mit Elektromagnetantrieben ausgeführt ist, die sich bei Vorliegen des Steuersignals an deren Eingängen öffnen.

Es ist erwünscht, dass in der Einrichtung zur automatischen Auswuchtung einer Schleifscheibe die Funktion des Unwuchtgebers gemäss der Erfindung ein am Maschinengestell angeordnets Akzelerometer übernimmt und der Treiberverstärker in Form einer Reihenschaltung aus einem Begrenzerverstärker und einem Einweggleichrichter ausgeführt ist.

Es ist durchaus vertretbar, dass in der erfindungsgemässen Einrichtung N Hohlraum-Stellungsgeber zur Verfügung stehen, die am Maschinengestell um die Spindel herum gleichmässig angeordnet sind.

Vom Standpunkt des Zuverlässigkeitsgewinns ist es vorteilhaft, dass in der erfindungsgemässen Einrichtung an der Maschinenspindel N über den Körper der Ausgleichsvorrichtung gleichmässig verteilte Markierungen ausgeführt sowie zwei Hohlraum-Stellungsgeber verfügbar sind, deren Ausgänge über eine Schalteinrichtung an die Eingänge der Koinzidenzschaltung gelegt sind, um Hohlraum-Stellungsimpulse wechselweise abgeben zu können.

Es ist möglich, dass in der erfindungsgemässen Einrichtung die Koinzidenzschaltung in Form von D-Flipflops ausgeführt ist, deren Anzahl gleich der Anzahl N der Hohlräume ist, wobei die D-Eingänge der D-Flipflops an den gemeinsamen Eingang der Koizidenzschaltung angeschlossen sind, deren andere Eingänge als C-Eingänge der D-Flipflops dienen.

Zulässig ist es auch, dass in der erfindungsgemässen Einrichtung die Koizidenzschaltung über N an N Integrationskreise angeschaltete 2-Eingangs-UND-Glieder verfügt, wobei ein Eingang jedes 2-Eingangs-UND-Gliedes an den gemeinsamen Eingang der Koinzidenzschaltung angeschalossen ist, deren andere Eingänge als die anderen Eingänge der 2-Eingangs-UND- Glieder wirken und die Ausgänge der Integrationskreise als Ausgänge der Koinzidenzschaltung fungieren.

Die vorliegende Erfindung gestattet es, die Betriebszuverlässigkeit der Einrichtung zur automatischen Auswuchtung einer Schleifscheibe, deren Genauigkeit durch Einführung eines Unwuchtgebers in die Konstruktion der Einrichtung, der mechanische Schwingungen in ein elektrisches Signal umwandelt, sowie durch Einführung einer elektroni-

- 5 -

schen Schaltung zur Verarbeitung dieses elektrischen Signals zu steigern, deren Arbeit voll automatisch erfolgt und es gestattet, diejenigen Hohlräume der Ausgeeichsvorrichtung genau zu bestimmen, denen die Flüssigkeit zugeführt werden soll, bis die Unwucht voll ausgeglichen ist.

Kurzbeschreibung der Zeichnungen

Diese und andere Ziele und Vorteile der Erfindung sollen aus einer detailierten Beschreibung eines Ausführungsbeispiels mit Bezugnahme auf beiliegende Zeichnungen ersichtlich werden. Es zeigt:

Fig. I ein Funktionsschaltbild einer erfindungsgemässen Einrichtung zur automatischen Auswuchtung einer Schleifscheibe;

Fig. 2 ein elektrisches Schaltbild einer an zwei Hohlraum-Stellungsgeber angeschlossenen erfindungsgemässen Ausgleichsvorrichtung;

Fig. 3 eine aus D-Flipflops aufgebaute erfindungsgemässe Koinzidenzschaltung;

Fig. 4 eine aus 2-Eingangs-UND-Gliedern und Integrationskreisen aufgebaute erfindungsgemässe Koinzidenzschaltung;

Fig. 5 Zeitdiagramme der Arbeit der erfindungsgemässen Einrichtung nach Fig. I;

Fig. 6 Zeitdiagramme der Arbeit einer erfindungsgmässen Schalteinrichtung.

Bevorzugte Ausführungsform der Erfindung

Die Einrichtung zur automatischen Auswuchtung einer Schleifscheibe enthält einen Unwuchtgeber (Fig. I) einer an der Maschinenspindel 3 angeordneten Schleifscheibe 2.

Der Unwuchtgeber I ist am Maschinengestellt 4 angeordnet und ist zur Umwandlung von an das Maschinengestell 4 durch die Schleifscheibe 2 vermittelten mechanischen Schwingungen in ein elektrisches Signal vorgesehen. Die Einrichtung umfasst auch eine Unwuchtausgelichsvorrichtung in Form eines Zylinderkörpers 5, der an der Spindel 3 montiert und durch radiale Trennwände 6 in N Höhräume $7_I$ bis $7_N$ (hier ist N gleich drei) geteilt ist, die am Umfang des Körpers 65 gleichmässig angeordnet sind. Die Hohlräume

$7_I$ bis $7_3$ sind durch Rohrleitungen 8 mit einem Verteiler 9 verbunden, der in Form von N, d.h. 3, Flüssigkeitsventilen $IO_I$, $IO_2$, $IO_3$ ausgeführt ist, die durch Stangen $II_I$, $II_2$, $II_3$ mit Elektromagnetantrieben $I2_I$, $I2_2$, $I2_3$ kinematisch verbunden sind. Der Unwuchtgeber I ist mit seinem Ausgang an den Eingang eines Treiberverstärkers I3 angeschlossen, der im gegebenen Fall in Form einer Reihenschaltung aus einem Begrenzverstärker I4 und einem Einweggleichrichter I5 aufgebaut ist. Der Ausgang des Treiberverstärkers I3 ist an einen gemeinsamen Eingang einer Koinzidenzschaltung I6 angeschlossen, deren andere Eingänge an N, d.h. 3, Stellungsgeber $I7_I$ bis $I7_3$ für die jeweiligen, am Gestell A angeordneten Hohlräume $7_I$ bis $7_3$ angeschaltet sind. Die Ausgänge der Koinzidenzschaltung I6 sind zu den Eingängen der jeweiligen Elektromagnetantriebe $I2_I$, $I2_2$, $I2_3$ des Verteilers 9 geführt. Der Verteiler 9 ist durch eine Rohrleitung I8 mit einer Quelle I9 einer in einen gemeinsamen Kanal 2C des Verteilers 9 einströmenden Flüssigkeit verbunden. Am Körper 5 der Unwuchtausgelichsvorrichtung ist eine Markierung 2I in Form eines Ansatzes in der Weise befestigt, dass bei deren Vorbeigehen an den Gebern $I7_I$ bis $I7_3$ die letzteren einen Stellungsimpuls abgeben.

Der Unwuchtgeber I ist in Kombination mit dem Treiber-verstärker I3 zur Erzeugung eines Unwuchtsignals in Form eines periodischen Zweipegelsignals und die Koinzidenzschaltung I6 zur Verarbeitung eines Steuersignals bei einer Koinzidenz der Stellungsimpulse für die Hohlräume $7_I$ bis $7_3$ mit einem Unwuchtsignal mit aktivem Pegel vorgesehen, das am Verteiler 9 ankommt, um die Flüssigkeit dem jeweiligen Hohlraum $7_I$ bis $7_3$ zufliessen zu lassen.

Als Unwuchtgeber I kommt ein beliebiger Schwingungsgeber in Betracht, der mechanische Schwingungen in ein elektrisches Signal (Handbuch "Vibratsia v tekhnike" ("Vibration in der Technik"), Bd. 5, Verlag "Maschinostroenie", Moskau, I98I, S. 209) umsetzt.

Am zweckmässigsten erscheint aber vom Standpunkt der Empfindlichkeit gegen mechanische Schwingungen der Einsatz eines Akzelerometers als Unwuchtgeber I, an dessen Ausgang bei Vorliegen der mechanischen Schwingungen ein elektri - sches Sinussignal mit einer sich in Abhängigkeit von der Unwuchtgrösse ändernden Amplitude auftritt. Der Begrenzerverstärker I4 mit einem grossen Verstäkrungsfaktor K ($K \approx I \cdot I0^5$), der die Amplitude des Ausgangssignals des Gebers I vergrössert, ist in einer allbekannten Schaltung ausgeführt. Um die Unwuchtgenauigkeit zu erhöhen, ist es wünschenswert, dass der Verstärkungsfaktor K höchstzulässig ist. Der Einweggleichrichter I5, beispielsweise eine Diode, ist zur Formierung eines endgültigen Unwuchtsignals in Form eines periodischen Zweipegelsignals vorgesehen.

Der Treiberverstärker I3 kann in einer beliebigen anderen bekannten Schaltung (A.B.Skvorchevskii, N.B.Promyslov "Uravnoveshivanie vrascajuschikhsja mass giropriborov" ("Auswuchten rotierender Massen von Kreiselgeräten"), veröffentlicht I977, Verlag "Sodustroenie", Leningrad, S. I42, I46) ausgeführt sein.

Die Markierung 2I kann in Form eines Ansatzes oder einer Vertiefung auf bzw. in dem Körper 5 ausgeführt sein. In diesem Fall können als Stellungsgeber $I7_I$, $I7_2$, $I7_3$ kontaktlose Elektrogeräte ("Politekhnicheskii slovar", ("Polytechnisches Wörterbuch") veröffentlicht I980, Verlag "Sovetskaya entzikopedija", Moskau, S. 53) eingesetzt werden. Die Markierung 2I kann mit einer Kontrastfarbe auf die Aussenfläche des Körpers 5 aufgetragen sein (in diesem Fall ist es notwendig, als Stellungsgeber $I7_I$ bis $I7_3$ Fotogeber zu verwenden, die je eine Lichtquelle und eine Fotodiode (s. A.B.Skvorchevskii, N.B.Promyslov "Uravnoveshivanie vrascajuschikhsja mass girorpiborov", veröffentlicht I977, Verlag "Sudostroenie", Leningrad, S. I45, I5I) umfassen.

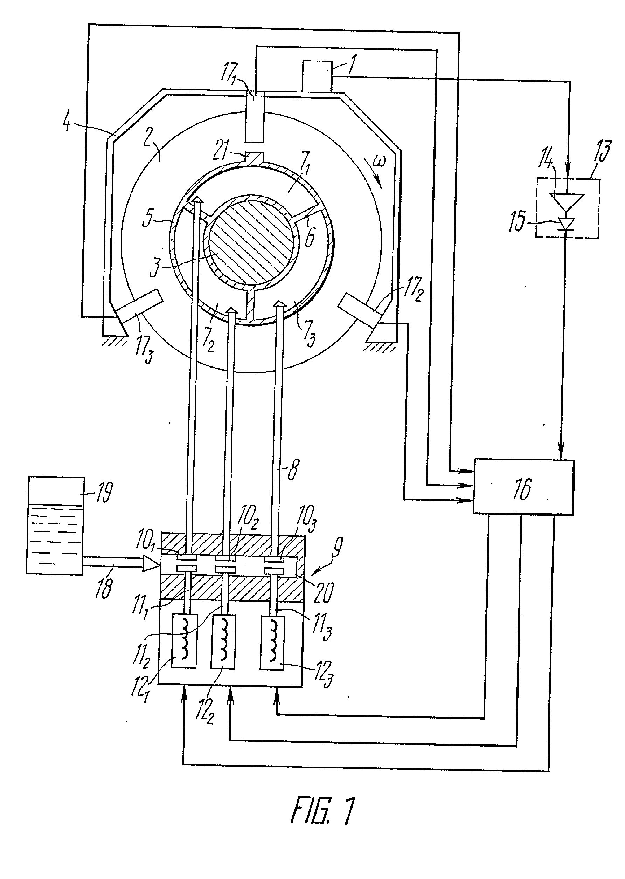

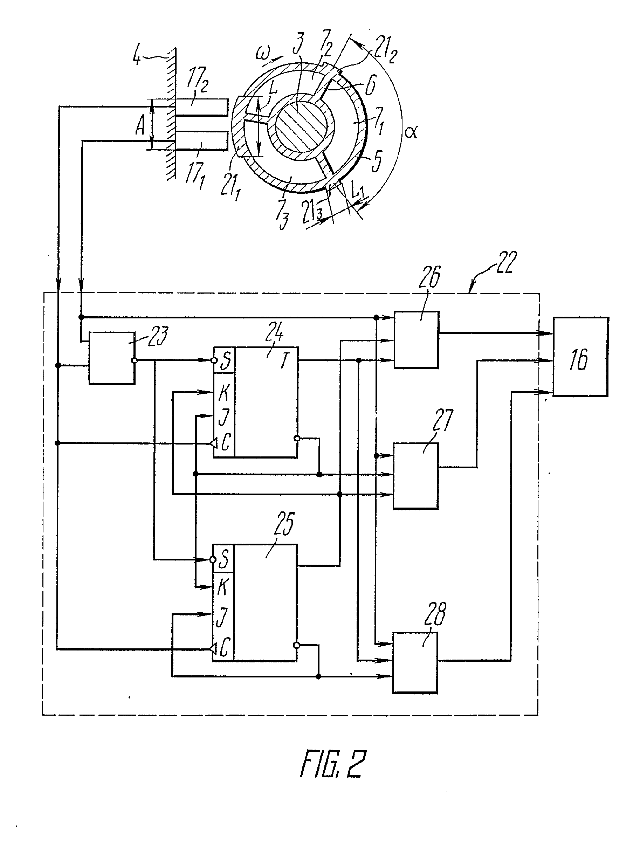

In Fig. 2 ist es zu sehen, dass die erfindungsgemässe Einrichtung mit zwei am Gestell 4 angeordneten Stellungsgebern $I7_I$, $I7_2$ ausgettattet ist. Auf der Seitenfläche des Körpers 5 der Unwuchtausgleichsvorrichtung sind N, nämlich drei, Markierungen $2I_I$, $2I_2$, $2I_3$ ausgeführt, die um einen gleichen Verschiebungswinkel $\alpha$, nämlich um einen Winkel $\alpha = I20°$, gegeneinander versetzt sind. Hierbei hat die eine der Markierungen $2I_I$ eine Länge L, die nicht kleiner als der Abstand A zwischen den Stellungsgebern $I7_I$, $I7_2$

ist. Die übrigen Markierungen $2I_2$, $2I_3$ sind mit einer
Länge von L $\leq$ A/2 ausgeführt.

Die Länge L der Markierung $2I_I$ ist zur Einstellung
des Ableseursprungspunktes und zur genauen Bestimmung
einer eindeutigen Zuordnung von den Markierungen $2I_I$, $2I_2$,
$2I_3$ und ihren jeweiligen Hohlräumen $7_I$, $7_2$, $7_3$ gewählt.
Die Geber $I7_I$. $I7_2$ sind mit ihren Ausgängen an die Eingege einer Schalteinrichtung 22 angeschlossen, deren Ausgänge an die Eingänge der Koinzidenzschaltung I6 gelegt sind.
Die Schalteinrichtung 22 umfasst ein zur Einstellung des
Ursprungspunktes für die Ablesung vorgesehenes 2-Eingangs-
UND-NICHT-Glied 23, zwei die Funktion eines Stellungsimpulszählers übernehmende JK-Flipflops 24, 25 und drei
die Funktion eines Zustandsentschlüsslers für die JK-
Flipflops 24, 25 erfüllende 3-Eingangs-UND-Glieder 26,
27, 28. Die ersten Eingänge sämtlicher logischen Glieder
23, 26, 27, 28 sind an einen Eingang der Schalteinrichtung
22 angeschlossen, an deren anderen Eingang der zweite
Eingang des 2-Eingangs-UND-NICHT-Gliedes 23 und die C-Eingänge der JK-Flipflops 24, 25 gelegt sind, deren S-Umkehreingänge an den Ausgang des 2-Eingangs-UND-NICHT-Gliedes
23 geschaltet sind. Der Direktausgang des JK-Flipflops
24 ist an die anderen Eingänge der 3-Eingangs-UND-Glieder
26, 28 und der Umkehrausgang des JK-Flipflops 24 an dessen
mit dem K-Eingang des JK-Flipflops 25 gekoppelten J-Eingang und an einen anderen Eingang des 3-Eingangs-UND-Gliedes 27 angeschlossen. Der Direktausgang des JK-Flipflops
25 ist an die übrigen Eingänge der 3-Eingangs-UND-Glieder
26, 27 und an den K-Eingang des JK-Flipflops 24 angekoppelt, während der Umkehrausgang des JK-Flipflops 25 an
dessen J-Eingang und an den restlichen Eingang des 3-Eingangs-UND-Gliedes 28 gelegt ist. Die Ausgänge der 3-Eingangs-UND-Glieder 26, 27, 28 sind zu den Eingängen der
Koinzidenzschaltung I6 geführt. Mit Hilfe der zwei Stellungsgeber $I7_I$, $I7_2$ können N (drei) Stellungsimpulsfolgen
im Unterschied zu der in Fig. I dargestellten Ausführungsform erzeugt werden, wo N Stellungsgeber $I7_I$ bis $I7_3$ anzuordnen sind.

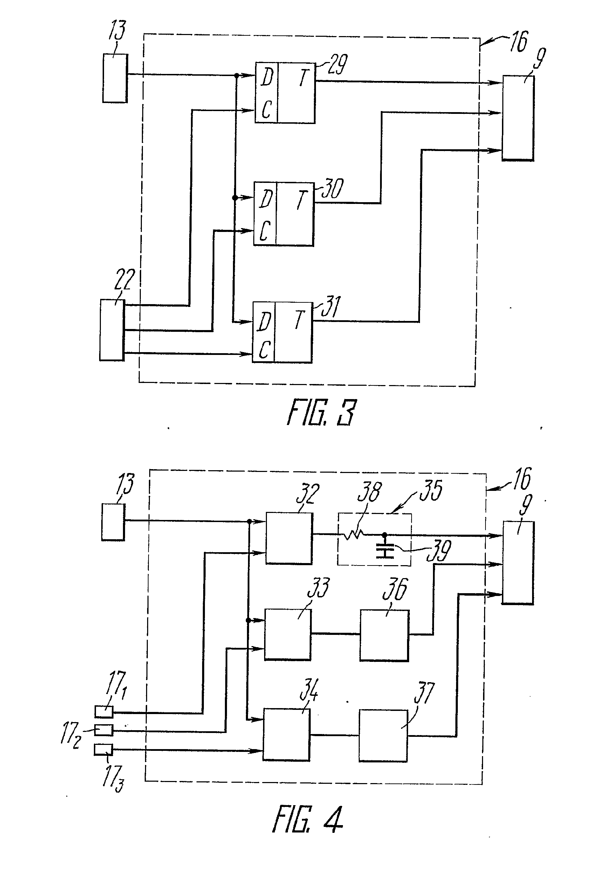

In Fig. 3 ist die Koinzidenzschaltung I6 dargestellt, die N (d.h. drei) D-Flipflops 29, 30, 3I enthält, deren
D-Eingänge an den gemeinsamen Eingang der Koinzidenzschaltung I6 und deren C-Eingänge an die anderen Eingänge der
Koinzidenzschaltung I6 angeschlossen sind. Die Ausgänge
der D-Flipflops 29, 30, 3I wirken als Ausgänge der Koinzidenzschaltung (I6).

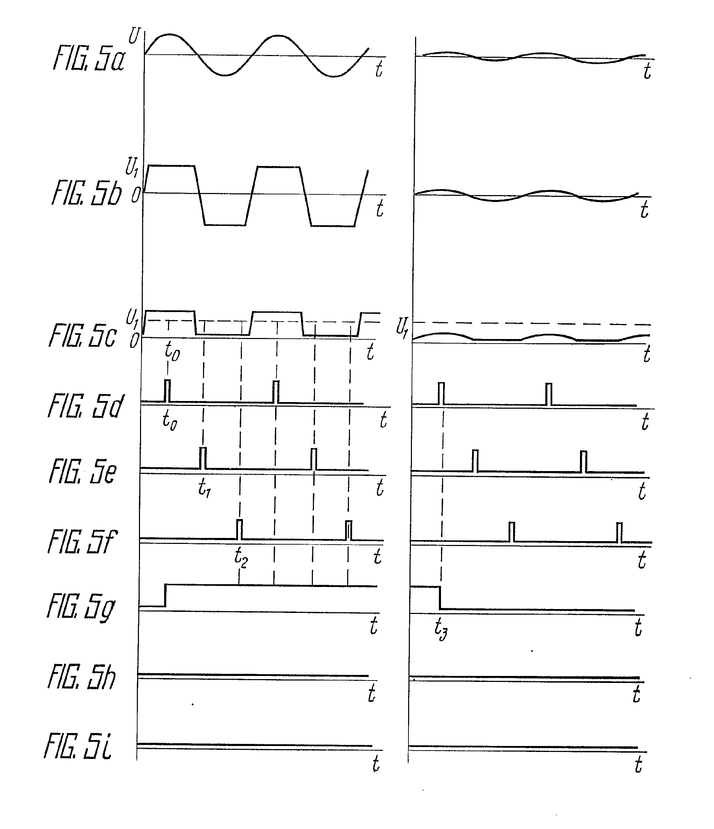

Gemäss der in Fig. 4 dargestellten Ausführungsform
umfasst die Koinzidenzschaltung I6 N (d.h. drei) 2-Ein-
gangs-UND-Glieder 32, 33, 34, deren Ausgänge an Integrationskreise 35, 36, 37 gelegt sind, die in Form von je
einen Widerstand 38 und einen Kondensator 39 aufweisenden
herkömmlichen RC-Kreisen ausgeführt sind, deren Ausgänge
als die der Koinzidenzschaltung I6 auftreten. Der eine
der Eingänge jedes 2-Eingangs-UND-Gliedes 32, 33, 34 ist
an den gemeinsamen Eingang der Koinzidenzschaltung I6
gekoppelt, deren andere Eingänge die anderen Eingänge der
2-Eingangs-UND-Glieder 32, 33, 34 sind.

Von den zwei vorgeschlagenen Ausführungsformen der
Koinzidenzschaltung I6 wird die in Fig. 3 wiedergegebenen
vorgezogen, da sie schaltungstechnisch einfacher ist,
keiner Einstellung bedarf, die die RC-Integrationskreise
35, 36, 37 (Fig. 4) benötigen, und also die höchste Zuverlässigkeit besitzt.

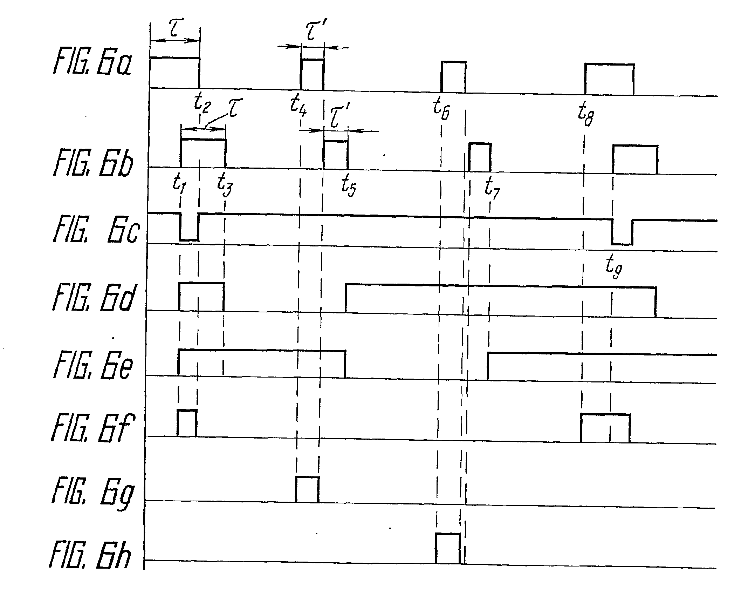

In Fig. 5 sind Zeitdiagramme a, b, c, d, e, f, g, h,
i wiedergegeben, die die Arbeit der erfindungsgemässen
Einrichtung beschreiben. Der Anfang des Auswuchtvorganges
ist im linken Teil der Diagramme a bis i, die Beendigung
des Auswuchtvorganges in deren rechtem Teil dargestellt.
Hier ist im Diagramm a ein Signal am Ausgang des Unwuchtgebers I (Fig. I), im Diagramm b (Fig. 5) ein Signal am
Ausgang des Begrenzerverstärkers I4 (Fig. I), im Diagramm
c (Fig. 5) ein Unwuchtsignal, d.h. ein periodisches Zweipegelsignal am Ausgang des Treibenverstärkers I3 (Fig. I),
also am gemeinsamen Eingang der Schaltung I6 dargestellt,
deren aktiver Pegel ein hoher Pegel ist. In den Diagrammen
d, e, f, (Fig. 5) sind Folgen von Stellungsimpulsen dargestellt, die an den anderen Eingängen der Koinzidenzschaltung I6 (Fig. I) ankommen.

Im Diagramm g (Fig. 5) ist ein Steuersignal darge-

0305522

stellt, das von einem der Ausgänge der Koïnzidenzschaltung
I6 (Fig. I) an einen der Eingänge des Verteilers 9 gelangt.
Die Diagramme h, i (Fig. 5) charakterisieren ein Ausbleiben von Steuersignalen an den anderen Ausgängen der
Schaltung I6 (Fig. I).

Fig. 6 zeigt die Zeitdiagramme a, b, c, d, e, f, g,
h der Arbeit der Schalteinrichtung 22 (Fig. 2). Hier sind
in den Diagrammen a, b Folgen von an den Ausgängen der Geber $I7_I$ (Fig. 2) bzw. $I7_2$ auftretenden Stellungsimpulsen,
im Diagramm c (Fig. 6) ein Signal am Ausgang des 2-Eingangs-UND-Gliedes 23 (Fig. 2) dargestellt. Im Diagramm d,
e (Fig. 6) sind an den Direktausgängen der JK-Flipflops
·24 (Fig. 2), 25 liegende Signale, in den Diagrammen f
(Fig. 6), g, h Stellungsimpulse für die Hohlräume $7_I$ bis
$7_3$ (Fig. 2) wiedergegeben, die an den Eingängen der Koinzidensschaltung I6 anliegen.

Die Einrichtung zur automatischen Auswuchtung einer
Schleifscheibe arbeitet wie folgt.

Liegt eine Unausgeglichenheit (Unwucht) der Schleifscheibe 2 vor, wandelt der Unwuchtgeber I (Fig. I) die
mechanischen Schwingungen des Gestells 6 und also auch
der Schleifscheibe 2 in ein periodisches elektrisches Signal (Diagramm a, Fig. 5) mit einer der Rotationsfrequenz
der Spindel 3 (Fig. I) gleichen Frequenz um, das am Eingang
des Treiberverstärkers I3 eintrifft, der dieses Signal
(Diagramm b, Fig. 5) im Begrenzerverstärker I4 (Fig. I)
umwandelt (verstärkt) und das verstärkte Signal mit Hilfe
des Einweggleichrichters I5 in ein Unwuchtsignal (Diagramm
c in Fig. 5) in Form eines periodischen Zweiwegsignals
mit der gleichen Frequenz umsetzt, das am gemeinsamen Eingang der Koinzidenzschaltung I6 (Fig. I) eintrifft. Die
Markierung 2I lässt am Ausgang jedes Gebers $I7_I$ bis $I7_3$
beim Passieren der letzteren einen Stellungsimpuls (Diagramme d, e, f, Fig. 5) erscheinen, die an die anderen
Eingänge der Koinzidenzschaltung I6 (Fig. I) gelangen. Bei
der zeitlichen Koinzidenz des Stellungsimpulses mit dem
wirksamen Pegel des Unwuchtsignals (hier ist das ein 1-Pegel) stellt sich am jeweiligen Ausgang der Koinzidenzschaltung I6 ein aktiver Pegel,nämlich ein 1-Pegel des Steuersignals (Diagramm g, Fig. 5) ein. Bei der zeitlichen Koinzidenz des Stellungsimpulses mit dem C-Pegel des Unwuchtsignals stellt sich am jeweiligen Ausgang der Koinzidenzschaltung I6 (Fig. I) ein Nullpegel des Steuersignals (Diagramm h, i, Fig. 5) ein. Dies ist am Beispiel der Ausführungsform der Koinzidenzschaltung I6 (Fig. 3) mit den D-Flipflops 29, 30, 3I leicht zu erklären. In diesem Fall stellt sich am Ausgang jedes D-Flipflops 29, 30, 3I ein Signal des gleichen Pegels wie auch an dessen C-Eingang ein, d.h. am Ausgang des D-Flipflops 29 liegt ein 1-Steuersignal (Diagramm g, Fig. 5) und an den Ausgängen der D-Flipflops 30 (Fig. 3), 3I ein 0-Steuersignal (Diagramme h, i, Fig. 5) an. Falls die Koinzidenzschaltung I6 (Fig. 4) aus den 2-Eingangs-UND-Gliedern 32, 33, 34 und den Integrationskreisen 35, 36, 37 aufgebaut ist, erscheint an den Ausgängen derjenigen 2-Eingangs-UND-Glieder 32, 33 oder 34, an deren Eingängen gleichzeitig Stellungsimpulse (Zeitpunkt $t_0$ im Diagramm d, Fig. 5) und ein Unwuchtsignal mit aktivem (1-)Pegel (Diagramm c, Fig. 5) anliegen, hier am Ausgang des 2-Eingangs-UND-Gliedes 32 (Fig. 4), ein den Stellungsimpuls wiederholender Impuls, der mit Hilfe des Integrationskreises 35, 36 oder 37 (hier des Integrationskreises 35) in ein 1-Signal (Diagramm g, Fig. 5) umgesetzt wird, das als Steuersignal für die Flüssigkeitszuführung wirkt. Bei der Koinzidenz der Stellungsimpulse mit dem O-Unwuchtsignal (Zeitpunkte $t_I$, $t_2$ in den Diagrammen e, f, Fig. 5) tritt am Ausgang der logischen Glieder 33 (Fig. 4), 34 und also auch am Ausgang der Interrationskreise 36, 37 ein 0-Steuersignal (Diagramme h, i, Fig. 5) auf. Die Steuersignale vom Ausgang der Koinzidenzschaltung I6 (Fig. I) gelangen auf den Verteiler 9, wo das 1-Steuersignal den jeweiligen Elektroantrieb $I2_I$ in den Einschaltzustand bringt und das 0-Steuersignal die anderen Elektroantriebe $I2_2$, $I2_3$ abschalten lässt. Der mit dem Steuersignal betätigte Elektroantrieb $I2_I$ öffnet mittels der Stange $II_I$ das Flüssigkeitsventil $IO_I$.

Die von der Quelle I9 strömende Flüssigkeit (beispielsweise Wasser, Öl) wird durch das geöffnete Flüssigkeits-

ventil $IO_I$ dem Hohlraum $7_I$ so lange zugeführt, bis am Eingang des Elektroantriebs $I2_I$ ein 1-Steuersignal eingetroffen ist.

Mit der Amplitudenabnahme bei einem vom Unwuchtgeber I ankommenden Signal erscheint am Ausgang des Treiberverstärkers I3 ein 0-Unwuchtsignal (linker Teil des Diagramms c in Fig. 5), dessen mit der Linie $U_I$ bezeichneter Pegel unterhalb der Empfindlichkeitsschwelle der Koizzidenzschaltung I6 liegt, und mit Erscheinen eines weiteren Stellungsimpulses für den Hohlraum $7_I$ (Fig. I) (Diagramm d, Fig. 5) wird der Pegel des Steuersignals am Ausgang der Koinzidenzschaltung I6 (Fig. 3) (d.h. am Ausgang des D-Flipflops 29) zu einem 0-Pegel, was zu einer Einstellung der Flüssigkeitszuführung zum Hohlraum $7_I$ (Fig. I) (s. Zeitpunkt $t_3$ im rechten Teil des Diagramms g, Fig. 5) führt.

Es soll nun auf die Arbeit der Schalteinrichtung 22 (Fig. 2) eingegangen werden. Bei der Drehung der Schleifscheibe 2 (Fig. I) (in Pfeilrichtung $\omega$ in Fig. 2) gehen die Markierungen $2I_I$ bis $2I_3$ (Fig. 2) nacheinander an den Stellungsgebern $I7_I$, $I7_2$ vorbei, und die letzteren erzeugen Stellungsimpulsfolgen (Diagramme a, b, Fig. 6), die gegeneinander phasenverschoben sind, weil die Geber $I7_I$, $I7_2$ voneinander in einem Abstand A liegen, wobei der eine der Steuerimpulse in jeder Folge, der beim Durchgang der Markierung $2I_I$ der Länge L erzeugt wird, eine Dauer $\tau$ aufweisen wird, die die Dauer $\tau$ der anderen Stellungsimpulse derselben Folge übersteigt. Bei der zeitlichen Koinzidenz von die Dauer $\tau$ aufweisenden Stellungsimpulsen der beiden Folgen (s. Zeitpunkte $t_I$ und $t_2$ der Diagramme a, b in Fig. 6, die an den Eingängen des 2-Eingangs-UND-NICHT-Gliedes 23 (Fig. 2) ankommen, erscheint an dessen Ausgang ein Strobimpuls (Diagramm c, Fig. 6), der an die S-Eingänge der JK-Flipflops 24, 25 gelangt, wobei er sie auf den 1-Zustand setzt, der nach dessen Vermittlung an die einen Eingänge des 3-Eingangs-UND-Gliedes 26 bei Anliegen eines Impulses (Diagramm a, Fig. 6) vom Geber $I7_I$ (Fig.2) an den anderen Eingängen des ersteren ein ähnlicher Impuls (Diagramm f, Fig. 6) am Ausgang des 3-Eingangs-UND-Gliedes 26 (Fig. 2) (Stellungsimpuls für den Hohlraum $7_I$) erscheinen lässt. Mit der Hinterflanke eines Impulses vom Geber $I7_2$ (Fig. 2) (s. Zeitpunkt $t_3$ im Diagramm b, Fig. 6) wird das JK-Flipflop 24 auf den O-Zustand (Diagramm d, Fig. 6) gesetzt, während das JK-Flipflop 25 (Fig. 2) im 1-Zustand (Diagramm e, Fig. 6) bleibt. Zum Zeitpunkt $t_4$ erscheint am am Ausgang des Gebers $I7_I$ (Fig. 2) ein weiterer Stellungsimpuls der Dauer $\tau$ (Diagramm a, Fig. 6), der vom Eingang des 3-Eingangs-UND-Gliedes 27 (Fig. 3), an dessen anderen Eingängen 1-Impulse vom Umkehrausgang des JK-Flipflops 24 bzw. vom Direktausgang des JK-Flipflops 25 anliegen, zum Ausgang des 3-Eingangs-UND-Gliedes 27 als Stellungsimpulse (Diagramm g in Fig. 6) für den nächsten Hohlraum $7_2$ (Fig. 2) übertragen wird. Mit der Hinterflanke des nächstfolgenden Impulses (Zeitpunkt $t_5$ im Diagramm b, Fig. 6) vom Geber $I7_2$ (Fig. 2) wird das JK-Flipflop 24 über den J-Eingang auf 1 und das JK-Flipflop 25 auf O (Diagramme d, e, Fig. 6) gesetzt. Zum Zeitpunkt $t_6$ (Fig. 6) erscheint ein weiterer Impuls (Diagramm a, Fig. 6) vom Geber $I7_I$ (Fig. 2), der in Analogie zu dem für den Zeitpunkt $t_4$ (Fig. 6) beschriebenen Fall zum Eingang des 3-Eingangs-UND-Gliedes 28 (Fig. 2) durchkommt, an dessen zwei anderen Eingängen 1-Impulse vom Umkehrausgang des JK-Flipflops 25 bzw. dem Direktausgang des JK-Flipflops 24 anliegen, und am Ausgang des 3-Eingangs-UND-Gliedes 28 als Stellungsimpuls (Diagramm h, Fig. 6) für den dritten Hohlraum $7_3$ (Fig. 2) auftritt. Mit der Hinterflanke eines Impulses vom Geber $I7_2$ bleibt das JK-Flipflop 24 (Fig. 2) zum Zeitmoment $t_7$ (Fig. 6) im 1-Zustand, während das JK-Flipflop 25 vom O-Zustand in den 1-Zustand (Diagramme d, e, Fig. 6) umkippt. Zum Zeitpunkt $t_8$ erscheint ein Impuls (Diagramm a, Fig. 6) vom Geber $I7_I$ (Fig. 2), der in Analogie zum oben Beschriebenen zum Ausgang des 3-Eingangs-UND-Gliedes 26 gelangt. Zum Zeitpunkt $t_9$ (Fig. 6) erscheint am Ausgang des 2-Eingangs-UND-NICHT-Gliedes 23 bei einer Koinzidenz von Impulsen (Diagramme a, b, Fig. 6) der Geber $I7_I$ (Fig. 2) und $I7_2$ mit einer Dauer grösser als $\tau$ ein O-Impuls, der den 1-Zustand der JK-Flipflops 24, 25 unterstützt und im Falle einer Störung das beliebige der JK-Flipflops 24, 25 zwingt, in den 1-Zustand überzugehen, was die Betriebszuverlässigkeit der Schaltung erhöht. Von den Ausgängen der Schalteinrichtung 22 gelangen die Stellungsimpulse für die Hohlräume $7_I$ bis $7_3$ an die Eingänge der Koinzidenzschaltung 16 (Fig. I), an deren gemeinsamen Eingang ein Unwuchtsignal vom Treibverstärker 13 ankommt.

Um eine störungsfreie Arbeit der Einrichtung zur automatischen Auswuchtung einer Schleifscheibe mit Sicherheit zu ermöglichen, gilt es, diese zur richtigen gegenseitigen Anordnung des Gebers I und der Geber $17_I$, $17_2$,..., $17_N$ (N = 3) voreinzustellen, weshalb die Stellungsgeber $17_I$ bis $17_3$ an die Eingänge der Koinzidenzschaltung 16 und deren Ausgängen an die Eingänge der Elektromagnetantriebe $12_I$ bis $12_3$ derart angeschlossen werden, dass die an den Gebern $17_I$ bis $17_3$ bei der Rotation des Körpers 5 der Ausgleichsvorrichtung abgelesenen Stellungsimpulsfolgen der Reihenfolge des Durchganges von Schwerpunkten der Hohlräume $7_I$ bis $7_3$ durch ein und denselben wahlfreien feststehenden Ableseursprungspunkt (Nullpunkt) beispielsweise auf dem Gestell am Montageort des Gebers $17_I$ entsprechen. Dann ist es, ohne die Schleifscheibe 2 einzustellen und die Hohlräume $7_I$ bis $7_3$ an die Flüssigkeitsquelle 19 anzuschliessen, notwendig, die Spindel 3 zu betätigen und eine künstliche Unwucht durch Füllung des einen der Hohlräume, beispielsweise des Hohlraumes $7_I$, mit einer Flüssigkeit zu schaffen. Durch Änderung der gegenseitigen Anordnung des Unwuchtgebers I und der Geber $17_I$ bis $17_3$ oder durch Änderung der Ortslage der Markierung 2I wird eine Betätigung (Öffnung) der mit den leeren Hohlräumen $7_2$ und $7_3$ verbundenen Flüssigkeitsventile $10_2$ und $10_3$ erreicht, wobei der offene Zustand der Flüssigkeitsventile mit Hilfe von Anzeigern, beispielsweise von (in Fig. I nicht gezeigten) Lampfen registriert wird, die parallel zu den Elektromagnetantrieben $12_I$ bis $12_3$ geschaltet sind. Das Aufleichten der Lampen zeugt davon, dass eine richtige gegenseitige Anordnung für die Geber I, $17_I$ bis $17_3$ und die Markierung 2I gefunden ist, wobei die zulässige winkelmässige Genauigkeit der gegenseitigen Anordnung der Geber

$I7_I$ bis $I7_3 \pm 30°$ beträgt, was trotz der von der Hand nicht zu weisenden Grösse die Genauigkeit des Auswuchtvorganges nichtdestoweniger nicht beeinflusst, die hierbei nur von der Empfindlichkeit des Unwuchtgebers I abhängt, und die niedrigen Forderungen an die Einstellgenauigkeit wirken also auf die Auswuchtgenauigkeit nicht ein, was die Zuverlässigkeit der Einrichtung im ganzen erhöht.

Die Feineinstellung der Einrichtung kann mit Hilfe eines Zweistrahloszillografen (in Fig. I nicht angedeutet) vorgenommen werden, bei dem der eine der Eingänge an den Ausgang des Treiberverstärkers I3, der andere an den Ausgang des Stellungsgebers $I7_I$ für den Hohlraum $7_I$ (beim aufgefüllten ersten Hohlraum $7_I$) angeschlossen ist. Hierbei soll der Stellungsimpuls für den Hohlraum $7_I$ mit der Mitte der nullten Halbperiode eines auf dem Oszillografenschirm angezeigten Unwuchtsignals zusammenfallen.

Das erste Abstimmverfahren ist das einfachste, während das zweite eine höhere Betriebszuverlässigkeit der Einrichtung während der Arbeit bei eventuellen Abweichungen der Geber I, $I7_I$, bis $I7_3$ von der Anfangsstellung sichert.

Die vorliegende Erfindung gestattet es, als Unwuchtgeber I einen beliebigen Schwingungsgeber einzusetzen, der mechanische Schwingungen in ein elektrisches Signal umwandelt und eine hohe Empfindlichkeit besitzt, die den Forderungen an die Messung geringfügiger Abweichungen der geometrischen Achse der Spindel 2 von deren Drehachse bei einer Unwucht genügt. Nach einer Verstärkung des elektrischen Signals vom Ausgang des Unwuchtgebers I (um einige zehn tausend Male) und nach einer Umwandlung des verstärten Signals im Treiberverstärker I3 wird es möglich, das Unwuchtsignal in Form eines periodischen Zweipegelsignals zu erhalten, das eine hohe Störfestigkeit gegen äussere Einflüsse aufweist, was eine hohe Betriebszuverlässigkeit der Koinzidenzschaltung I6 bedingt. Darüber hinaus wird die Betriebszuverlässigkeit der Einrichtung zur automatischen Auswuchtung einer Schleifscheibe 2 durch geringfügige zufällige Amplitudenschwankungen des elektrischen Signals nicht beeinflusst. Grosse zufällige mechanische Einflüsse, die das Unwuchtsignal verzerren, wirken auf die Genauigkeit der Auswuchtung und auf deren Zuverlässigkeit nicht ein, denn das richtige Arbeiten der Einrichtung wird bei jeder Umdrehung der Schleifscheibe 2 geprüft.

Die Einrichtung umfasst nur ein rotierendes Element - die Ausgleichsvorrichtung mit den Hohlräumen $7_I$ bis $7_3$, während der Verteiler 9 und der Unwuchtgeber I am Gestell starr befestigt sind, was die Betriebszuverlässigkeit der gesamten Einrichtung zur automatischen Auswuchtung einer Schleifscheibe beträchtlich steigert. Dank der genannten Besonderheit kann die Einrichtung in eine herzustellende oder betriebene Werkzeugmaschine leicht eingebaut werden.

Die Koinzidenzschaltung I6 und der Treiberverstärker I3, welche als Grundsteuerschaltungen der Einrichtung dienen, haben einfache Bestandteile und können daher aus Standardelementen aufgebaut werden, deren Anzahl gering ist, was die Betriebszuverlässigkeit der Einrichtung ebenfalls erhöht.

In der erfindungsgemässen Einrichtung entfällt die Druckluftzuführung, um eine Flüssigkeit in die Hohlräume $7_I$ bis $7_3$ einströmen zu lassen, denn die Flüssigkeit wird den Hohlräumen $7_I$ bis $7_3$ mit Hilfe der Flüssigkeitsventile $10_1$ bis $10_3$ zugeleitet, die sich unter der Wirkung der Elektromagnetantriebe $12_1$ bis $12_3$ in Abhängigkeit vom Steuersignalpegel öffnen, was es gestattet, die Betriebszuverlässigkeit der Einrichtung zu erhöhen.

## Gewerbliche Anwendbarkeit

Die vorliegende Erfindung kann in beliebigen Maschinen mit rotierendem Läufer, z.B. in Schleif-, Drehmaschinen beliebigen Typs, in Zentrifugen, in Motoren, darunter auch Turbomotoren, verwendet werden, wo es gilt, eine Unwucht bei rotierenden Teilen zu beheben. Falls der Läufer in einigen Korrekturebenen ausgewuchtet werden muss, können am Läufer mehrere Unwuchtausgleichsvorrichtung der erfindungsgemässen Einrichtung angeordnet werden, die durch unabhängige Steuerschaltungen gesteuert werden.

Bei Anwendung einer Schmelze aus einem Feststoff (Metall, Epoxydharz, Paraffin) als Flüssigkeit, mit der die Hohlräume gefüllt werden, kann eine einmalige Auswuchtung einer  Schleifscheibe oder eines anderen rotierenden Teils vorgenommenen werden.

PATENTANSPRÜCHE

1. Einrichtung zur automatischen Auswuchtung einer an der Maschinenspindel angeordneten Schleifscheibe, die einen Unwuchtgeber (1), eine Unwuchtausgleichsvorrichtung, die in Form eines an der Spindel (3) angeordneten Zylinderkörpers (5) mit N Hohlräumen (N $\geq$ 3) ausgeführt ist, die an dessen Umfang gleichmässig angeordnet sind, und einen mit diesen und mit einer Flüssigkeitsquelle (19) verbundenen Verteiler (9) enthält, dadurch g e k e n n - z e i c h n e t, dass sie mit einem Treiberverstärker (13), der an den Ausgang des ein Unwuchtsignal in Form eines periodischen Zweipegelsignals erzeugenden Unwuchtgebers (1) angeschlossen ist, mit mindestens einer mit der Unwuchtausgleichsvorrichtung starr gekoppelten Markierung (21), mit mindestens zwei Stellungsgebern (17) für die Hohlräume ($7_I$ bis $7_N$), die am Maschinengestell (4) angeordnet sind und Stellungsimpulse für die Hohlräume ($7_I$ bis $7_N$) beim Vorbeigehen der Markierung (21) an den Stellungsgebern (17) erzeugen, und mit einer Koinzidenzschaltung (16) versehen ist, deren Ausgänge an die Eingänge des Verteilers (9), deren gemeinsamer Eingang an den Ausgang des Treiberverstärkers (13) angeschlossen und deren andere Eingänge mit den Ausgängen der Stellungsgeber (17) elektrisch gekoppelt sind und die zur Erzeugung eines Steuersignals für die Flüssigkeitszuführung zum jeweiligen Hohlraum ($7_I$ bis $7_N$) bei einer zeitlichen Koinzidenz der Hohlraum-Stellungsimpulse mit dem Unwuchtsignal mit aktivem Pegel vorgesehen ist, wobei der Verteiler (9) in Form von N Flüssigkeitsventilen (10) mit diese bei Vorliegen des Steuersignals an ihren Eingängen öffnenden Elektromagnetantrieben (12) ausgeführt ist, während die Funktion des Unwuchtgebers (1) ein Geber übernimmt, der mechanische Schwingungen in ein elektrisches Signal umwandelt.

2. Einrichtung nach Anspruch 1, dadurch g e k e n n - z e i c h n e t, dass der Unwuchtgeber (1) in Form eines am Maschinengestell (4) angeordneten Akzelerometers und der Treiberverstärker (13) in Form einer Reihenschaltung aus einem Begrenzerverstärker (14) und einem Einweggleichrichter (15) ausgeführt ist.

3. Einrichtung nach Anspruch 1 oder 2, dadurch g e -
k e n n z e i c h n e t, dass sie mit den Stellungsgebern
($17_I$ bis $17_N$) für die Hohlräume ($7_I$ bis $7_N$) versehen ist,
die am Maschinengestell (4) um die Spindel (3) herum
gleichmässig angeordnet sind.

4. Einrichtung nach Anspruch 1 oder 2, dadurch g e -
k e n n z e i c h n e t, dass sie mit auf der Seitenfläche des Körpers (5) der Unwuchtausgleichsvorrichtung (5)
angebrachten und um gleiche Verschiebungswinkel $\alpha$ gegeneinander versetzten Markierungen ($21_I$ bis $21_N$) und mit
zwei Gebern ($17_I$ bis $17_2$) für die Hohlräume ($7_I$ bis $7_N$) versehen ist, deren Ausgänge an die Eingänge der Koinzidenzschaltung (16) über eine Schalteinrichtung (22) gelegt
sind, um Stellungsimpulse wechselweise abgeben zu können.

5. Einrichtung nach einem der Ansprüche 1 bis 4,
dadurch g e k e n n z e i c h n e t, dass die Koinzidenzschaltung (16) in Form von D-Flipflops (29, 30, 31) ausgeführt ist, deren Anzahl gleich der Anzahl N ist, wobei
die D-Eingänge der D-Flipflops (29, 30, 31) an den gemeinsamen Eingang der Koinzidenzschaltung (16) angeschlossen
sind und deren C-Eingänge als die anderen Eingänge der
Koinzidenzschaltung (16) dienen.

6. Einrichtung nach einem der Ansprüche 1 bis 4,
dadurch g e k e n n z e i c h n e t, dass die Koinzidenzschaltung (16) über N an N Integrationskreise (35, 36, 37)
angeschlossene 2-EingangseUND-Glieder (32, 33, 34) verfügt, wobei ein Eingang eines jeden der 2-Eingangs-UND-
Glieder (32, 33, 34) an den gemeinsamen Eingang der Koinzidenzschaltung (16) angeschlossen ist, deren andere Eingänge als die anderen Eingänge der erstgenannten wirken,
und der Ausgang eines jeden der Integrationskreise (35,
36, 37) als Ausgang der Koinzidenzschaltung (16) fungiert.

FIG. 1

0305522

FIG. 2

0305522

FIG. 3

FIG. 4

0305522

4/5

FIG. 5a

FIG. 5b

FIG. 5c

FIG. 5d

FIG. 5e

FIG. 5f

FIG. 5g

FIG. 5h

FIG. 5i

FIG. 6a
FIG. 6b
FIG. 6c
FIG. 6d
FIG. 6e
FIG. 6f
FIG. 6g
FIG. 6h

# INTERNATIONAL SEARCH REPORT

International Application No PCT/SU 87/00033

## I. CLASSIFICATION OF SUBJECT MATTER (if several classification symbols apply, indicate all) [6]

According to International Patent Classification (IPC) or to both National Classification and IPC

IPC[4]     G 01 M 1/22

## II. FIELDS SEARCHED

### Minimum Documentation Searched [7]

| Classification System | Classification Symbols |
|---|---|
| IPC[4] | G 01 M 1/22, 1/38, 1/30, 1/16 |

### Documentation Searched other than Minimum Documentation to the Extent that such Documents are Included in the Fields Searched [8]

## III. DOCUMENTS CONSIDERED TO BE RELEVANT [9]

| Category [•] | Citation of Document, [11] with indication, where appropriate, of the relevant passages [12] | Relevant to Claim No. [13] |
|---|---|---|
| A | SU, A1, 729458, (Vsesojuzny zaochny machinostriotelny institut) 26 April 1980, (26.04.80), see the claims | 1,4,5 |
| A | SU, A1, 741079, (V.G. Juziev), 20 June 1980 (20.06.80), see the claims | 1-3 |
| A | SU, A1, 1221521, (V.I. Ivanov et al.) 30 March 1986, (30.03.86), see the claims | 1-3 |
| A | DE, A1, 3503724, (Hofmann Werkstatt-Technik GmbH), 07 August 1986 (07.08.86), see the claims | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&". document member of the same patent family

## IV. CERTIFICATION

| Date of the Actual Completion of the International Search | Date of Mailing of this International Search Report |
|---|---|
| 24 November 1987 (24.11.87) | 18 December 1987 (18.12.87) |

| International Searching Authority | Signature of Authorized Officer |
|---|---|
| ISA/SU | |

Form PCT/ISA/210 (second sheet) (January 1985)